# EUROPEAN PATENT APPLICATION

(11) **EP 4 331 802 A1**
(43) Date of publication of application: **06.03.2024**
(21) Application number: 22795337.9
(22) Date of filing: 16.03.2022
(51) Int. Cl.: B29C 33/02, B29C 33/40, B29C 35/02

(54) **VULCANIZING BLADDER AND COATING MATERIAL THEREFOR**

(30) Priority: 28.04.2021 JP 2021075747
(71) Applicant: The Yokohama Rubber Co., Ltd., Kanagawa Prefecture, 254-8601 (JP)
(72) Inventor: SAIKI Takeaki, Hiratsuka-shi, Kanagawa 254-8601 (JP); KARASAWA Yuichiro, Hiratsuka-shi, Kanagawa 254-8601 (JP); TSUCHITANI Shuji, Hiratsuka-shi, Kanagawa 254-8601 (JP); KOIDE Shota, Hiratsuka-shi, Kanagawa 254-8601 (JP); KOSUDA Yuri, Hiratsuka-shi, Kanagawa 254-8601 (JP); YAMAMOTO Kenta, Hiratsuka-shi, Kanagawa 254-8601 (JP)
(74) Representative: Dilg, Haeusler, Schindelmann Patentanwaltsgesellschaft mbH
(86) International application number: PCT/JP2022/011840
(87) International publication number: WO 2022/230415

(57) **Abstract**

Provided is a bladder that can provide long-lasting releasability and a sustained and improved service life thereof even by vulcanization molding of a rubber product made of an unvulcanized rubber compound containing halogenated butyl rubber and a coating material used for the bladder. The bladder for vulcanization molding of a rubber product made of an unvulcanized rubber compound containing halogenated butyl rubber includes a silicone rubber layer on an outermost surface thereof. The silicone rubber layer is made of a cured product containing condensation-curable silicone rubber and an organic acid metal compound dissolved therein. 0.001 to 3 parts by mass of the organic acid metal compound as a metal amount is contained per 100 parts by mass of the condensation-curable silicone rubber.

## Description

### Technical Field

The present invention relates to a vulcanizing bladder for vulcanization molding of a rubber product without using a release agent and a coating material used therefor.

### Background Art

Vulcanization molding of a tire is performed by placing a green tire formed from an unvulcanized rubber compound in a mold, inserting a vulcanizing bladder into the tire inner cavity of the green tire, filling the inside of the vulcanizing bladder with a high-temperature and high-pressure fluid to expand the bladder, and pressing the green tire against the mold to heat and pressurize the green tire. To smoothly remove the vulcanizing bladder from the vulcanized tire, a release agent is often applied to the inner surface of the green tire or the outer surface of the vulcanizing bladder for each vulcanization molding.

Tires in which value-added devices such as sponge sound absorbing materials, self-sealing materials, and various sensors are brought into close contact with the innerliner side of the tire inner cavity has recently been increased. A tire formed by vulcanization molding with a known release agent may cause the release agent to remain on the inner surface of the innerliner, and thus the value-added device may not be able to be closely attached to the tire. For this reason, disposing a silicone rubber layer with a cured silicone-based release coating material on the outer surface of the vulcanizing bladder has made releasability satisfactory without applying a release agent for each vulcanization molding (see, for example, Patent Documents 1 to 3). What forms a silicone rubber layer on the outer surface of the vulcanizing bladder in this manner is called a permanent type or semi-permanent type silicone-based release coating material.

The bladder including the silicone rubber layer with the cured permanent type or semi-permanent type silicone-based release coating material can be repeatedly subjected to vulcanization molding without a release agent being applied to until the bladder reaches the end of its service life. Unfortunately, vulcanization molding of a tire made of an unvulcanized rubber compound containing halogenated butyl rubber causes the silicone rubber layer to be likely to degrade and the productivity to decrease.

### Citation List

### Patent Literature

Patent Document 1: JP H7-88015 B
Patent Document 2: JP H8-5064 B
Patent Document 3: JP 2020-175523 A

### Summary of Invention

### Technical Problem

An object of the present invention is to provide a bladder that can provide long-lasting releasability and a sustained and improved service life thereof even by vulcanization molding of a rubber product made of an unvulcanized rubber compound containing halogenated butyl rubber and a coating material used for the bladder.

### Solution to Problem

A vulcanizing bladder according to an embodiment of the present invention to achieve the above-described object is a vulcanizing bladder for vulcanization molding of a rubber product made of an unvulcanized rubber compound containing halogenated butyl rubber and includes a silicone rubber layer on an outermost surface thereof. The silicone rubber layer is made of a cured product containing condensation-curable silicone rubber and an organic acid metal compound dissolved therein. 0.001 to 3 parts by mass of the organic acid metal compound as a metal amount is contained per 100 parts by mass of the condensation-curable silicone rubber.

A coating material according to an embodiment of the present invention is a coating material to be used for a vulcanizing bladder for vulcanization molding of a rubber product made of an unvulcanized rubber compound containing halogenated butyl rubber and includes condensation-curable silicone rubber and an organic acid metal compound dissolved therein. 0.001 to 3 parts by mass of the organic acid metal compound as a metal amount is contained per 100 parts by mass of the condensation-curable silicone rubber.

### Advantageous Effects of Invention

The vulcanizing bladder according to an embodiment of the present invention can provide a long-lasting releasability and a sustained and improved service life thereof even by vulcanization molding of a rubber product made of an unvulcanized rubber compound containing halogenated butyl rubber. This is considered to be because free halogen generated from the halogenated butyl rubber degrades condensation-curable silicone rubber, whereas an organic acid metal compound dissolved in the condensation-curable silicone rubber functions as a halogen capturing agent that captures the free halogen, thereby greatly suppressing the degradation of the condensation-curable silicone rubber. Producing a rubber product by vulcanization molding of an unvulcanized rubber compound containing halogenated butyl rubber using the vulcanizing bladder according to an embodiment of the present invention allows a high-quality rubber product to be stably produced without using a common release agent.

The thickness of the silicone rubber layer, which preferably ranges from 1 to 100 µm, allows for long-lasting good releasability and is advantageous from the viewpoint of production cost.

The organic acid metal compound preferably contains at least one metal selected from the group consisting of zinc, manganese, iron, cerium, and copper and is preferably derived from a fatty acid having 2 to 12 carbons. Such an organic acid metal compound dissolves in condensation-curable silicone rubber and can further improve the effect of capturing free halogen.

The condensation-curable silicone rubber is preferably deaminated condensation-curable silicone rubber, allowing for further improving the releasability and durability of the silicone rubber layer.

Further, applying the coating material according to an embodiment of the present invention to the surface of a vulcanizing bladder and curing the material allows the above-described vulcanizing bladder including a silicone rubber layer on its outermost surface to be easily obtained.

The coating material is an organic solvent solution of the condensation-curable silicone rubber and the organic acid metal compound or a water-based emulsion of the condensation-curable silicone rubber and the organic acid metal compound. A total of the condensation-curable silicone rubber and the organic acid metal compound preferably ranges from 2 to 50 mass% in 100 mass% of the coating material, allowing for forming a silicone rubber layer that has good sprayability and coatability onto a surface of a vulcanizing bladder and is uniform without spots to be formed.

The condensation-curable silicone rubber of the coating material is preferably deaminated condensation-curable silicone rubber, allowing for further improving the releasability and durability of the silicone rubber layer.

The organic acid metal compound of the coating material preferably contains at least one metal selected from the group consisting of zinc, manganese, iron, cerium, and copper and is preferably derived from a fatty acid having 2 to 12 carbons. Such an organic acid metal compound dissolves in condensation-curable silicone rubber and can further improve the effect of capturing free halogen.

### Description of Embodiments

The vulcanizing bladder according to an embodiment of the present invention is suitably used for vulcanization molding of a rubber product made of an unvulcanized rubber compound containing halogenated butyl rubber. Of course, the bladder is also suitably used for vulcanization molding of an unvulcanized rubber compound made of butyl rubber containing no halogen.

The vulcanizing bladder includes a silicone rubber layer on its outermost surface. The silicone rubber layer is a cured product containing condensation-curable silicone rubber and an organic acid metal compound dissolved therein. Here, the condensation-curable silicone rubber may be rubber of any type of deamination, dehydration, dealcoholation, deoximation, deacetic acid, dehydroxylamine, dehydrogenation, or the like and is preferably a composition suitable for forming a silicone rubber layer. Of these, the condensation-curable silicone rubber is preferably deaminated condensation-curable silicone rubber, allowing for further improving the releasability and durability of the silicone rubber layer. The condensation-curable silicone rubber can apply a product marketed as a so-called permanent type silicone-based release coating material or a semi-permanent type silicone-based release coating material.

The silicone rubber layer contains an organic acid metal compound dissolved in condensation-curable silicone rubber. The organic acid metal compound dissolves in the condensation-curable silicone rubber, whereby the organic acid metal compound can be uniformly dispersed in the silicone rubber layer. In contrast, in the case of an organic acid metal compound that does not dissolve in the condensation-curable silicone rubber, the organic acid metal compound is present in the form of particles in applying the organic acid metal compound to the bladder surface by spraying, coating, or the like, thus degrading dispersibility. The effect of capturing free halogen transitioning from the unvulcanized rubber compound containing halogenated butyl rubber is small.

The organic acid metal compound is not limited to a particular compound as long as it dissolves in the condensation-curable silicone rubber but is preferably a fatty acid metal salt. The metal contained in the organic acid metal compound is preferably at least one selected from the group consisting of zinc, manganese, iron, cerium, and copper, more preferably contains zinc and/or manganese, and preferably contains zinc in particular.

A suitable fatty acid metal salt is preferably derived from a fatty acid having 2 to 12 carbons, more preferably from 4 to 10 carbons. The fatty acid may be any of a linear fatty acid, a branched fatty acid, and a cyclic fatty acid, and may further have a carbon-carbon unsaturated bond. Examples of the fatty acid include acetic acid, propanoic acid, butanoic acid, pentanoic acid, hexanoic acid, heptanoic acid, octanoic acid, nonanoic acid, decanoic acid, undecanonic acid, dodecanoic acid, 2-methylpropanoic acid, 2-methylbutanoic acid, 3-methylbutanoic acid, 2-methylpentanoic acid, 3-methylpentanoic acid, 4-methylpentanoic acid, methylhexanoic acid, ethylhexanoic acid, methylheptanoic acid, ethylheptanoic acid, methyloctanoic acid, ethyloctanoic acid, methylnonanoic acid, ethylnonanoic acid, 2,2-dimethylpropanoic acid (also called neopentanoic acid), dimethyloctanoic acid (including neodecanoic acid), and 3-(3-ethylcyclopentyl)propionic acid (also called naphthenic acid).

The organic acid metal compound derived from the above-described metal and/or fatty acid is dissolved in the condensation-curable silicone rubber and can more effectively capture free halogen transitioning from the unvulcanized rubber compound containing halogenated butyl rubber.

The cured product constituting the silicone rubber layer contains from 0.001 to 3 parts by mass, preferably from 0.01 to 2.7 parts by mass, more preferably from 0.02 to 2.5 parts by mass, and still more preferably from 0.05 to 2.0 parts by mass of the organic acid metal compound as a metal amount per 100 parts by mass of the condensation-curable silicone rubber. Containing the organic acid metal compound in such a metal amount allows free halogen transitioning from the unvulcanized rubber compound containing the halogenated butyl rubber to be reliably captured.

The thickness of the silicone rubber layer ranges preferably from 1 to 100 µm and more preferably from 10 to 80 µm. Causing the silicone rubber layer to have such a thickness allows for long-lasting good releasability and is advantageous from the viewpoint of production cost.

Vulcanization molding of a rubber product made of an unvulcanized rubber compound using the vulcanizing bladder according to an embodiment of the present invention can achieve excellent releasability between the vulcanizing bladder and the vulcanized product and allows the releasability to be made long-lasting beyond conventional levels even when the unvulcanized rubber compound contains halogenated butyl rubber. This is considered to be because the organic acid metal compound dissolved in the condensation-curable silicone rubber captures the free halogen generated from the halogenated butyl rubber, thus greatly inhibiting the free halogen from degrading the condensation-curable silicone rubber. Producing a rubber product by vulcanization molding of an unvulcanized rubber compound containing halogenated butyl rubber using the vulcanizing bladder according to an embodiment of the present invention can stably produce a high-quality rubber product without using a common release agent. When the unvulcanized rubber compound contains preferably 40 mass% or more and more preferably from 50 to 100 mass% of the halogenated butyl rubber in 100 mass% of the rubber component contained, the effect of the vulcanizing bladder according to an embodiment of the present invention is more clearly exhibited.

The coating material according to an embodiment of the present invention is used for a vulcanizing bladder for vulcanization molding of a rubber product made of an unvulcanized rubber compound containing halogenated butyl rubber. The coating material contains condensation-curable silicone rubber and an organic acid metal compound dissolved therein and contains from 0.001 to 3 parts by mass, preferably from 0.02 to 2.5 parts by mass, and more preferably from 0.05 to 2.0 parts by mass of the organic acid metal compound as a metal amount per 100 parts by mass of the condensation-curable silicone rubber. Applying the coating material to the surface of a vulcanizing bladder and curing the material allows the above-described vulcanizing bladder including the silicone rubber layer on its outermost surface to be easily obtained. One hundred parts by mass of the condensation-curable silicone rubber is based on the mass of the solid content thereof.

The condensation-curable silicone rubber may be rubber of any type of deamination, dehydration, dealcoholation, deoximation, deacetic acid, dealcohol, deamination, dehydroxylamine, dehydrogenation, or the like and is preferably a composition suitable for forming a silicone rubber layer. Of these, the condensation-curable silicone rubber is preferably deaminated condensation-curable silicone rubber, allowing for further improving the releasability and durability of the silicone rubber layer. The condensation-curable silicone rubber can apply a product marketed as a so-called permanent type silicone-based release coating material or a semi-permanent type silicone-based release coating material.

The coating material contains condensation-curable silicone rubber and an organic acid metal compound dissolved therein. The organic acid metal compound dissolves in the condensation-curable silicone rubber, whereby the organic acid metal compound can be uniformly dispersed in the silicone rubber. In contrast, when the organic acid metal compound does not dissolve in the condensation-curable silicone rubber, the organic acid metal compound is present in the form of particles in applying the organic acid metal compound to the bladder surface by spraying, coating, or the like, thus degrading dispersibility. The effect of capturing free halogen transitioning from the unvulcanized rubber compound containing halogenated butyl rubber is small.

The organic acid metal compound is not limited to a particular compound as long as it dissolves in the condensation-curable silicone rubber, but is preferably a fatty acid metal salt. The metal contained in the organic acid metal compound is preferably at least one selected from the group consisting of zinc, manganese, iron, cerium, and copper, more preferably contains zinc and/or manganese, and preferably contains zinc in particular.

The organic acid metal compound preferably contains at least one metal selected from the group consisting of zinc, manganese, iron, cerium, and copper and is preferably derived from a fatty acid having 2 to 12 carbons. Such an organic acid metal compound is dissolved in condensation-curable silicone rubber and can further improve the effect of capturing free halogen.

A suitable fatty acid metal salt is preferably derived from a fatty acid having 2 to 12 carbons, more preferably from 4 to 10 carbons. The fatty acid may be any of a linear fatty acid, a branched fatty acid, and a cyclic fatty acid, and may further have a carbon-carbon unsaturated bond. Examples of the fatty acid include acetic acid, propanoic acid, butanoic acid, pentanoic acid, hexanoic acid, heptanoic acid, octanoic acid, nonanoic acid, decanoic acid, undecanonic acid, dodecanoic acid, 2-methylpropanoic acid, 2-methylbutanoic acid, 3-methylbutanoic acid, 2-methylpentanoic acid, 3-methylpentanoic acid, 4-methylpentanoic acid, methylhexanoic acid, ethylhexanoic acid, methylheptanoic acid, ethylheptanoic acid, methyloctanoic acid, ethyloctanoic acid, methylnonanoic acid, ethylnonanoic acid, 2,2-dimethylpropanoic acid (also called neopentanoic acid), dimethyloctanoic acid (including neodecanoic acid), and 3-(3-ethylcyclopentyl)propionic acid (also called naphthenic acid).

The organic acid metal compound derived from the above-described metal and/or fatty acid dissolves in the condensation-curable silicone rubber and can more effectively capture free halogen transitioning from the unvulcanized rubber compound containing halogenated butyl rubber.

The coating material is an organic solvent solution of the condensation-curable silicone rubber and the organic acid metal compound or an water-based emulsion of the condensation-curable silicone rubber and the organic acid metal compound. A total of the condensation-curable silicone rubber and the organic acid metal compound ranges preferably from 2 to 50 mass% and more preferably from 5 to 40 mass% in 100 mass% of the coating material. The total of the condensation-curable silicone rubber and the organic acid metal compound being within such a range allows for forming a uniform silicone rubber layer without spots having good sprayability and coatability onto the surface of the vulcanizing bladder. The mass of the condensation-curable silicone rubber and the organic acid metal compound in the coating material is the mass of each solid content.

The organic solvent is not limited to a particular solvent as long as it dissolves the condensation-curable silicone rubber and the organic acid metal compound. Examples of the organic solvent include industrial gasoline, volatile rubber oil, mineral spirit, hexane, cyclohexane, methylcyclohexane, isooctane, toluene, and xylene.

The water-based emulsion preferably contains water and a surfactant blended with the condensation-curable silicone rubber and the organic acid metal compound and preferably further contains a pH adjuster blended. The water is not particularly limited, and may be, for example, any of tap water, ion-exchanged water, distilled water, and the like, and ion-exchanged water, distilled water, and the like are preferable. Examples of the surfactant include nonionic surfactants, anionic surfactants, and amphoteric surfactants without particular limitations. These surfactants may be used alone or in combination of two or more thereof.

Examples of the nonionic surfactant include polyoxyethylene alkyl ethers, polyoxyethylene polyoxypropylene alkyl ethers, polyoxyethylene alkylphenyl ethers, polyethylene glycol fatty acid esters, polyoxyethylene sorbitan fatty acid esters, polyoxyethylene sorbitol fatty acid esters, polyoxyethylene glycerin fatty acid esters, polyglycerin fatty acid esters, propylene glycol fatty acid esters, polyoxyethylene castor oil, polyoxyethylene hydrogenated castor oil, polyoxyethylene hydrogenated castor oil fatty acid esters, polyoxyethylene alkylamine, polyoxyethylene fatty acid amide, polyoxyethylene-modified organopolysiloxane, and polyoxyethylene polyoxypropylene-modified organopolysiloxane.

Examples of the anionic surfactant include alkyl sulfates, polyoxyethylene alkyl ether sulfates, polyoxyethylene alkyl phenyl ether sulfates, sulfates of a fatty acid alkylolamide, alkylbenzene sulfonates, polyoxyethylene alkyl phenyl ether sulfonates, α-olefin sulfonates, α-sulfo fatty acid esters, alkyl naphthalene sulfonates, alkyl diphenyl ether disulfonates, alkane sulfonates, N-acyl taurate, dialkyl sulfosuccinates, monoalkyl sulfosuccinates, polyoxyethylene alkyl ether sulfosuccinates, fatty acid salts, polyoxyethylene alkyl ether carboxylates, N-acyl amino acid salts, monoalkyl phosphate esters, dialkyl phosphate esters, and polyoxyethylene alkyl ether phosphate esters.

Examples of the cationic surfactant include alkyltrimethylammonium salts, dialkyldimethylammonium salts, polyoxyethylene alkyldimethylammonium salts, dipolyoxyethylene alkylmethylammonium salts, tripolyoxyethylene alkylammonium salts, alkylbenzyldimethylammonium salts, alkylpyridium salts, monoalkylamine salts, and monoalkylamidoamine salts.

Examples of the amphoteric surfactant include alkyldimethylamine oxide, alkyldimethylcarboxybetaine, alkylamidopropyldimethylcarboxybetaine, alkylhydroxysulfobetaine, and alkylcarboxymethylhydroxyethylimidazolinium betaine.

Of these, nonionic surfactants are preferable, and polyoxyethylene alkyl ethers, polyoxyethylene polyoxypropylene alkyl ethers, and polyoxyethylene alkylphenyl ethers are particularly preferable.

The pH adjuster is not particularly limited, and examples thereof include inorganic salts such as sodium hydroxide, potassium hydroxide, and lithium hydroxide; carbonates such as ammonium hydroxide, quaternary ammonium hydroxide (e.g., tetramethylammonium), potassium carbonate, sodium carbonate, lithium carbonate, and sodium hydrogen carbonate; phosphates such as disodium hydrogen phosphate; amines such as monoethanolamine, diethanolamine, triethanolamine, propanolamine, and morpholine and modified products thereof.

Any additive may be added to the coating material as long as the technical effect of the present invention is not impaired. That is, a thickener, an antifoaming agent, a penetrant, an antistatic agent, an inorganic powder, a preservative, a silane coupling agent, a pH adjuster, a buffer, an ultraviolet absorber, a curing catalyst, a water-soluble resin, an organic resin emulsion, a pigment, a dye, and the like may be appropriately blended.

Embodiments according to the present invention are further described below by Examples. However, the scope of the present invention is not limited to these Examples.

### Examples

A coating material composed of an organic solvent solution was prepared by dissolving an organic metal compound in condensation-curable silicone rubber (deaminated condensation-curable silicone rubber, solid content 15 mass%, Rhenodiv BC-638 available from LANXESS AG) so as to contain the metal amount of the organic metal compound with respect to the solid content of the condensation-curable silicone rubber as shown in Table 1, and diluting the obtained material with a rubber volatile oil such that the total amount of the condensation-curable silicone rubber and the organic acid metal compound was 15 mass%.

The coating material obtained described above was placed in an aluminum cup (opening diameter 51 mm, bottom diameter 45 mm, depth 12 mm) such that the solid content was about 1.5 g, allowed to stand at room temperature for 1 day to remove the solvent, dried, and cured at 150°C for 1 hour, whereby a silicone rubber layer was obtained. For Comparative Examples 1 and 2 and Example 1, the mass of the silicone rubber layer was measured.

Separately, a Br-IIR vulcanized rubber piece (30 mm × 30 mm × 3 mm) containing 40 mass% of brominated butyl rubber and an IIR vulcanized rubber piece (30 mm × 30 mm × 3 mm) that contains no halogenated butyl rubber and consists of unmodified butyl rubber were produced.

As shown in Table 1, the Br-IIR vulcanized rubber piece or the IIR vulcanized rubber piece was layered on the silicone rubber layer and allowed to stand at 180°C for 168 hours. After 168 hours, the Br-IIR vulcanized rubber piece and the IIR vulcanized rubber piece were removed, and the state of the silicone rubber layer was observed by visual contact and finger touch, and presence or absence of a change from the initial state was described in Table 1. For Comparative Examples 1 and 2 and Example 1, the mass of the silicone rubber layer was measured, and mass% with respect to the initial mass was calculated.

**Table 1**

| | | Comparative Example 1 | Comparative Example 2 | Example 1 | Example 2 | Example 3 | Example 4 | Example 5 | Example 6 | Example 7 |
|---|---|---|---|---|---|---|---|---|---|---|
| Condensation-curable silicone rubber (solid content) | Parts by mass | 100 | 100 | 100 | 100 | 100 | 100 | 100 | 100 | 100 |
| Cerium 2-ethylhexanoate (metal amount) | Parts by mass | - | - | 0.01 | - | - | - | - | - | - |
| Copper neodecanoate (metal amount) | Parts by mass | - | - | - | 0.01 | - | - | - | - | - |
| Manganese 2-ethylhexanoate (metal amount) | Parts by mass | - | - | - | - | 0.01 | 30 | - | - | - |
| Iron 2-ethylhexanoate (metal amount) | Parts by mass | - | - | - | - | - | - | 0.01 | - | - |
| Zinc naphthenate (metal amount) | Parts by mass | - | - | - | - | - | - | - | 0.01 | 0.1 |
| Type of stacked rubber | - | Br-IIR | Unmodified-IIR | Br-IIR | Br-IIR | Br-IIR | Br-IIR | Br-IIR | Br-IIR | Br-IIR |
| Softening of coating layer (visual contact, finger touch tack) | - | Yes | No | No | No | No | No | No | No | No |

The raw materials used as per Table 1 are described below.
- Condensation-curable silicone rubber (deaminated condensation-curable silicone rubber, solid content 15 mass%, Rhenodiv BC-638 available from LANXESS AG)
- Cerium 2-ethylhexanoate (metal content of 24.4 mass%, available from HOPE CHEMICAL Co., Ltd.)
- Copper neodecanoate (metal content of 5.0 mass%, available from NIHON KAGAKU SANGYO CO., LTD.)
- Manganese 2-ethylhexanoate (metal content of 8.0 mass%, available from NIHON KAGAKU SANGYO CO., LTD.)
- Iron 2-ethylhexanoate (metal content of 6.0 mass%, available from NIHON KAGAKU SANGYO CO., LTD.)
- Zinc naphthenate (metal content of 8.0 mass%, available from Tokyo Chemical Industry Co., Ltd.)

In Table 1, degradation of the silicone rubber layer of Comparative Example 1 was visually observed, and softening and stickiness were observed by finger touch. The mass reduction was large, 94 mass% with respect to the initial mass.

On the other hand, the silicone rubber layer of Comparative Example 2 brought into contact with the IIR vulcanized rubber piece containing no halogenated butyl rubber had no change observed by visual contact or finger touch and had the small mass reduction, 97 mass% with respect to the initial mass.

Although brought into contact with the Br-IIR vulcanized rubber piece containing brominated butyl rubber, the silicone rubber layer of Example 1 had no change observed by visual contact or finger touch and had the small mass reduction, 97 mass% with respect to the initial mass.

Although brought into contact with the Br-IIR vulcanized rubber piece containing brominated butyl rubber, the silicone rubber layers of Examples 2 to 7 had no change observed by visual contact or finger touch.

## Claims

1. A vulcanizing bladder for vulcanization molding of a rubber product made of an unvulcanized rubber compound containing halogenated butyl rubber, the vulcanizing bladder comprising
a silicone rubber layer on an outermost surface thereof,
the silicone rubber layer being made of a cured product containing condensation-curable silicone rubber and an organic acid metal compound dissolved therein, and
0.001 to 3 parts by mass of the organic acid metal compound as a metal amount being contained per 100 parts by mass of the condensation-curable silicone rubber.

2. The vulcanizing bladder according to claim 1, wherein the silicone rubber layer has a thickness of from 1 to 100 µm.

3. The vulcanizing bladder according to claim 1 or 2, wherein the organic acid metal compound contains at least one metal selected from the group consisting of zinc, manganese, iron, cerium, and copper.

4. The vulcanizing bladder according to any one of claims 1 to 3, wherein the organic acid metal compound is derived from a fatty acid having 2 to 12 carbons.

5. The vulcanizing bladder according to any one of claims 1 to 4, wherein the condensation-curable silicone rubber is deaminated condensation-curable silicone rubber.

6. A coating material to be used for a vulcanizing bladder for vulcanization molding of a rubber product made of an unvulcanized rubber compound containing halogenated butyl rubber, the coating material comprising
condensation-curable silicone rubber and an organic acid metal compound dissolved therein,
0.001 to 3 parts by mass of the organic acid metal compound as a metal amount being contained per 100 parts by mass of the condensation-curable silicone rubber.

7. The coating material according to claim 6, wherein
the coating material is an organic solvent solution of the condensation-curable silicone rubber and the organic acid metal compound or a water-based emulsion of the condensation-curable silicone rubber and the organic acid metal compound, and
a total of the condensation-curable silicone rubber and the organic acid metal compound ranges from 2 to 50 mass% in 100 mass% of the coating material.

8. The coating material according to claim 6 or 7, wherein the condensation-curable silicone rubber is deaminated condensation-curable silicone rubber.

9. The coating material according to any one of claims 6 to 8, wherein the organic acid metal compound contains at least one metal selected from the group consisting of zinc, manganese, iron, cerium, and copper.

10. The coating material according to any one of claims 6 to 9, wherein the organic acid metal compound is derived from a fatty acid having 2 to 12 carbons.

11. The vulcanizing bladder according to any one of claims 1 to 5, comprising
a silicone rubber layer made of a cured product of the coating material according to any one of claims 6 to 10 on the outermost surface thereof.

12. A method of producing a rubber product, the method comprising
vulcanization molding of an unvulcanized rubber compound containing halogenated butyl rubber using the vulcanizing bladder according to any one of claims 1 to 5 and 11.
